# EUROPEAN PATENT APPLICATION

(11) **EP 4 782 486 A1**
(43) Date of publication of application: **29.07.2026**
(21) Application number: 25190305.0
(22) Date of filing: 17.07.2025
(51) Int. Cl.: C08J 5/18, C08J 3/20, A41G 1/00, B44C 1/24, B44C 5/06

(54) **ARTIFICIAL PLANT ORGAN, ARTIFICIAL PLANT AND METHOD FOR MANUFACTURING THE SAME**

(30) Priority: 24.01.2025 CN 202510121548
(71) Applicant: Polygroup Plastic Products (Guangxi) Company Limited, Guigang City, Guangxi 537300 (CN)
(72) Inventor: LEUNG, Chi Yin Alan, deceased (CN); LEE, Ee Teak, ChangPing (CN); CHOW, Lam Tim Simon, ChangPing (CN); LIN, Heng, ChangPing (CN)
(74) Representative: Finnegan Europe LLP

(57) **Abstract**

The present disclosure relates to an artificial plant organ, an artificial plant, and a method for manufacturing the same. The method for manufacturing an artificial plant organ described in the present disclosure includes: preparing a multifunctional biaxially oriented polyester film, and processing the multifunctional biaxially oriented polyester film into an artificial plant organ. The method for manufacturing the artificial plant provided in the present disclosure can improve the production efficiency of artificial plant organs or artificial plants, and improve the simulation degree and durability thereof. Furthermore, the artificial plant organs or artificial plants manufactured by the method are more environmentally friendly and safer, and have multiple practical performances.

## Description

### TECHNICAL FIELD

The present disclosure relates to the technical field of artificial plant, and in particular, to an artificial plant organ, an artificial plant and a method for manufacturing the same.

### BACKGROUND

Artificial plants are imitations that imitate plant forms and are designed and produced from highly simulated materials. Various types of artificial plants are popular with people as they have the advantages of not being limited by natural conditions such as sunlight, air and water, and needing no care. Traditional artificial plants are made of polyvinyl chloride (PVC) materials. However, artificial plants made of PVC materials are prone to deformation and discoloration when exposed to heat, and may sometimes cause a fire, further leading to safety issues. In addition, the production of PVC materials requires the use of raw materials such as chlorine and ethylene, which is poor in environmental protection and may release harmful substances over time. Furthermore, artificial plants made of PVC materials can only present a desired color by paint spraying, which has relatively high cost on the one hand, and the simulation degree is not enough on the other.

### SUMMARY

Accordingly, it is necessary to provide an artificial plant organ or an artificial plant, and a method for manufacturing the same to improve the simulation degree of artificial plants, reduce the cost, and be more environmentally friendly and safer, while also enabling it to have multiple practical functions.

In a first aspect, the present disclosure provides a method for manufacturing an artificial plant organ, including the following steps: preparing a multifunctional biaxially oriented polyester film; and processing the multifunctional biaxially oriented polyester film into an artificial plant organ.

In an embodiment, the plant organ includes an artificial root, an artificial stem, an artificial leaf, an artificial flower, an artificial fruit, and an artificial seed.

In an embodiment, after preparing the multifunctional biaxially oriented polyester film, the method further includes: embossing the multifunctional biaxially oriented polyester film to form an uneven embossing on a surface of the multifunctional biaxially oriented polyester film.

In an embodiment, preparing the multifunctional biaxially oriented polyester film includes: preparing polyethylene terephthalate pellets; adding one or more additives to the polyethylene terephthalate pellets to prepare multifunctional polyethylene terephthalate pellets; and processing the multifunctional polyethylene terephthalate pellets into the multifunctional biaxially oriented polyester film.

In an embodiment, preparing the polyethylene terephthalate pellets includes: processing a recycled product of polyethylene terephthalate material to obtain the polyethylene terephthalate pellets.

In an embodiment, the additive includes one or more additives selected from the group consisting of: color powder, light stabilizer, antistatic agent, flame retardant, anti-UV agent, antioxidant, matting agent, brightener, foaming agent, color-changing agent, antibacterial agent and combinations thereof.

In an embodiment, processing the multifunctional biaxially oriented polyester film into an artificial plant organ includes: cutting the multifunctional biaxially oriented polyester film into a desired shape to assemble into the artificial plant organ.

In a second aspect, the present disclosure provides an artificial plant organ manufactured by the method described in the first aspect.

In a third aspect, the present disclosure further provides a method for manufacturing an artificial plant, including the following steps: manufacturing an artificial plant organ by the method described in the first aspect; and assembling the artificial plant organ into the artificial plant.

In a fourth aspect, the present disclosure further provides an artificial plant manufactured by the method described in the third aspect.

In a fifth aspect, the present disclosure further provides a multifunctional biaxially oriented polyester film for manufacturing the aforementioned artificial plant organ or artificial plant.

The method for manufacturing the artificial plant organ or artificial plant described in the present disclosure not only innovatively uses BOPET, but also prepare multifunctional BOPET with many difficulties overcome. By preparing multifunctional BOPET and processing it into artificial plant organs and then into artificial plants, artificial plants with various desired functions can be simulated efficiently, and the simulation degree of artificial plants can be ensured. In addition, as BOPET used in the present method is more environmentally friendly than materials used in traditional artificial plants, and will not release harmful substances in subsequent use, the artificial plants manufactured by the present method are therefore further more environmentally friendly and safer.

### BRIEF DESCRIPTION OF THE DRAWINGS

FIG. 1 shows a schematic flow diagram of a method for manufacturing an artificial plant organ according to one embodiment of the present disclosure;
FIG. 2 shows a comparison figure of BOPET without embossing and with an uneven embossing formed thereon with embossing according to one embodiment of the present disclosure;
FIG. 3 shows a schematic flow diagram of the preparation of a multifunctional biaxially oriented polyester film in a method for manufacturing an artificial plant organ according to one embodiment of the present disclosure;
FIG. 4 shows a multifunctional biaxially oriented polyester film prepared according to the flow diagram shown in FIG. 3;
FIG. 5 shows a schematic flow diagram of a method for manufacturing an artificial plant according to one embodiment of the present disclosure; and
FIG. 6 shows a schematic diagram of one step in a method for manufacturing an artificial plant according to one embodiment of the present disclosure.

### DETAILED DESCRIPTION

In order to facilitate the understanding of the present disclosure, the present disclosure will be described more fully hereinafter with reference to the related accompanying drawings. Various embodiments of the present disclosure are presented in the accompanying drawings. However, the present disclosure may be embodied in many different forms and is not limited to the embodiments described herein. Rather, these embodiments are provided to make the present disclosure more thorough and complete.

All technical and scientific terms used herein have the same meaning as commonly understood by those of ordinary skill in the art to which the present disclosure applies, unless otherwise defined. The terms used in the specification of the present disclosure herein are for the purpose of describing specific embodiments only and are not intended to limit the present disclosure.

The term "artificial plant" used herein refers to a decorative product that imitates plant form and is designed and produced from highly simulation materials.

The term "artificial plant organ" used herein refers to an artificial root, an artificial stem, an artificial leaf, an artificial flower, an artificial fruit, an artificial seed of an artificial plant and the like, which are semi-finished products of artificial plants. In addition, these artificial plant organs can further be combined or assembled as required, which is also one of the semi-finished products of artificial plants.

The term "artificial plant component" used herein refers to an auxiliary component involved in the process of manufacturing an artificial plant, including but not limited to a support, a filler, a fastener, an additive, a binder, and the like.

The term "biaxially oriented polyester film (BOPET)" used herein refers to a high quality film prepared from polyester resin. BOPET herein can be produced by any method known to those skilled in the art. For example, the following process is mainly used for production in China: PET drying, heating and melting, extrusion casting, longitudinal stretching of thick sheets, transverse stretching, winding, slitting and packaging, and then further processing. BOPET itself can be glossy, and produce a similar effect to the reflection of real leaves when exposed to light.

The term "multifunctional" used herein means having multiple different functions or properties, such as color development, light stability, antistatic, flame retardancy, UV resistance, anti-oxidation, matte, brightening, foaming, color change and antibacterial functions or properties, etc., through a certain method. Therefore, a multifunctional biaxially oriented polyester film refers to a biaxially oriented polyester film having, for example, the aforementioned multiple different functions or properties. A biaxially oriented polyester film herein generally refers to a multifunctional biaxially oriented polyester film, unless otherwise specified.

The term "embossing" used herein refers to a process of changing the thickness of a material under the action of a mold to emboss concave and convex patterns or words on the surface of the material. In the present disclosure, BOPET is optionally embossed to form uneven embossing on its surface.

The term "polyethylene terephthalate pellets" used herein refers to a raw material of polyethylene terephthalate, which is not limited in form, but is preferably in the form of granules, particles, flakes, or scraps, etc.

In order to make the objects, technical solutions and advantages of the present disclosure clearer, the present disclosure will be further described in detail below with reference to the accompanying drawings and some embodiments. It should be understood that the specific embodiments described herein are only used to explain the present disclosure and are not intended to limit the present disclosure.

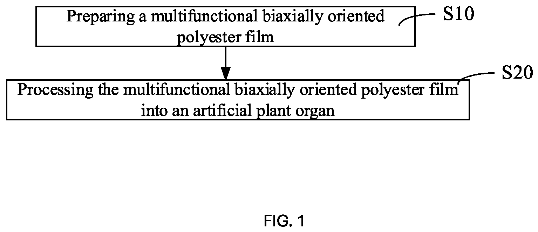

As shown in FIG. 1, in some embodiments, a method for manufacturing an artificial plant organ may include:
S10: preparing a multifunctional biaxially oriented polyester film (BOPET); and
S20: processing the multifunctional biaxially oriented polyester film into an artificial plant organ.

In S10, the multifunctional BOPET can be designed according to the requirements for the artificial plant organ, where the "multifunctional" is optionally color development, light stability, antistatic, flame retardancy, UV resistance, anti-oxidation, matte, brightening, antibacterial, etc. and combinations thereof. In some embodiments, the method for manufacturing BOPET can use methods and tools commonly used in the art, such as using a biaxial orientation stretching machine.

In S20, processing the multifunctional biaxially oriented polyester film into an artificial plant organ may include processing BOPET into an artificial plant organ using common means known in the art, including but not limited to cutting, winding, assembling, and the like. For example, in some embodiments, BOPET can be cut into a desired shape to assemble into an artificial plant organ. Cutting may be performed using means known in the art, including but not limited to manual cutting, machine cutting, and the like. In some embodiments, the cut BOPET can be assembled into an artificial plant organ by methods commonly used in the art.

As known in the art, the artificial plant organ may include an artificial root, an artificial stem, an artificial leaf, an artificial flower, an artificial fruit, and an artificial seed. In the present disclosure, multifunctional BOPET can be optionally processed into one or more of artificial root, artificial stem, artificial leaf, artificial flower, artificial fruit, and artificial seed according to design requirements. For example, if the desired artificial plant organ is an artificial leaf, the cut BOPET, and other desired artificial plant components such as leaf veins, can be further assembled into an artificial leaf. The resulting artificial leaf has soft texture, high tensile strength, and is not easily damaged. Optionally, the shape of leaf is, for example, strip, oval, heart, needle, palm, etc. and combinations thereof.

In some embodiments, BOPET is processed into an artificial plant organ, that is, BOPET is processed into individual separate root, stem, leaf, and the like. However, in some embodiments, in S20, the artificial plant organ processed from the multifunctional biaxially oriented polyester film may sometimes be integrated, depending on design requirements and processing flow. For example, leaves and stems connected to each other can be produced on the same sheet of BOPET, that is, the cutting is designed such that the cut BOPET can be assembled into a stem with leaves such as a branch with leaves after certain processing. This can reduce processing steps and save costs, and reduce defects in artificial plants.

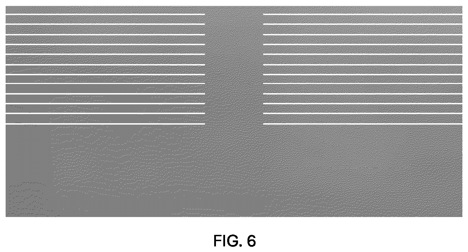

For example, in the case of manufacturing an artificial tree, BOPET can be cut into strips to form artificial leaves, in which it is designed to produce leaves and stems connected to each other on the same sheet of BOPET. That is, the leaf part is not cut apart from the stem part during cutting (as shown in FIG. 6), and they are then wound around a fixture such as an iron wire to form a branch with leaves.

In some embodiments, in order to increase the thickness of a leaf and make the tree product look denser and more beautiful, two or more sheets of biaxially oriented polyester films can be placed in parallel operating positions by using, for example, a stretching machine, cut separately at the same time, and wound around two iron wires, respectively, and then the two wound branches are wound together to form a single, denser branch. This production mode of integrating multiple sheets of BOPET together is herein referred to as a "multi-winding" pattern, and the mode of manufacturing a single sheet of BOPET into a branch is referred to as a "single winding" pattern. In some embodiments, the manufactured branch can be in a single winding or multi-winding pattern, such as double winding, triple winding, etc. as required. In some embodiments, a thickness of a manufactured single sheet of BOPET can be 10 µm to 200 µm, for example, 50 µm, 70 µm, or 100 µm. In some embodiments, the thickness of the single sheet of BOPET can be, for example, equal to or more than 65 µm, which makes the artificial tree in the aforementioned "double winding" pattern not only dense and beautiful, but also closer to real trees.

In the method for manufacturing the artificial plant organ, by processing the prepared multifunctional BOPET into an artificial plant organ, various plant organs can be simulated efficiently, and the simulation degree of the artificial plant can be ensured. As BOPET used in the present method is more environmentally friendly than materials used in traditional artificial plants, and will not release harmful substances in subsequent use, the artificial plants manufactured by the present method are therefore further more environmentally friendly and safer. More importantly, by replacing traditional PVC or BOPET with multifunctional BOPET, the resulting artificial plants can have multiple functions, achieving wide applications in various scenarios.

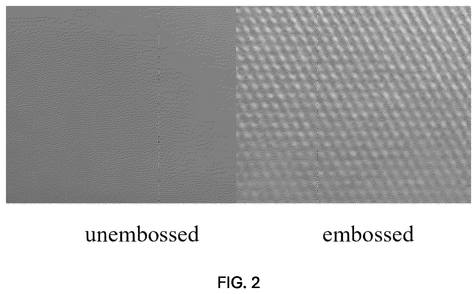

In other embodiments, after preparing the multifunctional biaxially oriented polyester film, the method further includes: embossing the multifunctional biaxially oriented polyester film to form an uneven embossing on a surface of the multifunctional biaxially oriented polyester film. In some embodiments, the surface of BOPET can be subjected to a pressure by using tools such as a concave-convex mold and an embossing roller, resulting in plastic deformation on the surface of BOPET, which in turn generating textures or patterns on the surface of BOPET. These textures and patterns also change the way light is reflected and scattered. Specifically, the uneven surface structure formed by embossing will cause light to diffusely reflect on the surface of BOPET, reducing the proportion of specular reflection and thus reducing glossiness. In this way, embossing with different depths and sizes can be embossed as required, and artificial plant organs with different glossiness and embossing sizes can thus be obtained, to simulate plant organs at different growth stages, which further improves the simulation degree of the artificial plants and thereby improving the visual realism of the artificial plant. For example, the uneven embossing can be formed on the surface of the multifunctional biaxially oriented polyester film by embossing with an embossing roller. A shape of the embossing can be designed as required, including but not limited to circle, square, rectangle, quadrilateral, triangle, oval, strip, etc. and combinations thereof. The multifunctional biaxially oriented polyester film can be partially or completely embossed, depending on the design requirements. For example, the multifunctional biaxially oriented polyester film can be partially embossed, wherein the embossed portion is subsequently processed into an artificial leaf, while the unembossed portion is subsequently processed into an artificial stem. For example, by pasting artificial leaves with different glossiness on the artificial stem according to the growth law of plants, the simulation degree of the artificial plant can be effectively improved. Different glossiness can be selected and given to different plant organs as required, that is, different plant organs can have different glossiness. For example, the glossiness of the artificial leaf may be brighter than that of the artificial stem, so as to make it more closely resemble the real plants in terms of visual realism. As shown in FIG. 2, a comparison figure of BOPET without embossing and with an uneven embossing formed thereon with embossing according to one embodiment of the present disclosure is shown. In this embodiment, the texture or pattern on the surface of BOPET is a dense crossed stripe, which can reduce the glossiness of BOPET to a level close to that of real plant organs, thereby avoiding excessive reflection that affects the simulation degree.

In certain embodiments, it may not include the step of embossing the multifunctional biaxially oriented polyester film. In other words, in some embodiments, for example, forming embossing on the surface of the artificial leaf to change the overall glossiness of the artificial leaf may not be performed, and there is no limitation in the present disclosure for this.

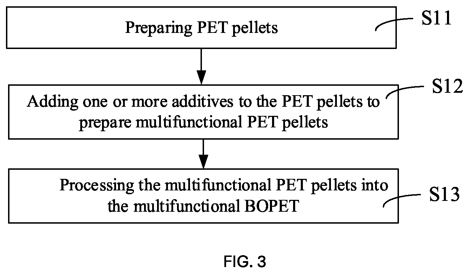

Referring to FIG. 3, in some embodiments, step S10 of preparing a multifunctional biaxially oriented polyester film may include the following steps:
S11: preparing polyethylene terephthalate (PET) pellets;
S12: adding one or more additives to the polyethylene terephthalate pellets to prepare multifunctional polyethylene terephthalate pellets; and
S13: processing the multifunctional polyethylene terephthalate pellets into the multifunctional biaxially oriented polyester film.

In step S11, the polyethylene terephthalate pellets can be obtained by processing a recycled product of polyethylene terephthalate material. The processing can be carried out using means well known in the art, as long as PET pellets can be obtained. For example, PET pellets can be obtained by crushing a recycled PET plastic product (e.g., a plastic water bottle). Specifically, the used PET plastic water bottle is recycled, and then is crushed into PET granules using, for example, a crusher. In the present disclosure, the recycling rate of the PET plastic product can reach 100%. The crushed PET pellets can be completely used as raw materials for preparation, without adding or supplementing other substances as main raw materials. This process can meet the requirements of GRS standard certification. The PET plastic water bottle is used in huge quantities, has a wide range of sources and is reproducible. In addition, the PET used for the body of bottle is of high purity, which reduces the purification cost and is more environmentally friendly. In an alternative embodiment, the PET pellets can also be purchased directly, which is not limited in the present disclosure.

In S12, one or more additives are added to the PET pellets to prepare multifunctional polyethylene terephthalate pellets, that is, a secondary granulation is performed. Specifically, in some embodiments, one or more additives can be mixed together with PET pellets in different proportions to produce multifunctional PET pellets. Then, in S 13, the multifunctional PET pellets are further used to prepare multifunctional BOPET.

The additives that can be used include, but are not limited to: color powder, light stabilizer, antistatic agent, flame retardant, anti-UV agent, antioxidant, matting agent, brightener, foaming agent, color-changing agent, antibacterial agent, etc. and combinations thereof. The type, amount, and combination of the above additives can be adjusted by those skilled in the art according to actual requirements. Under normal circumstances, additives commonly used in the art can be applied to the present disclosure. In some embodiments, each additive may be added in an amount of 1 wt% to 25 wt% of the entire composition (i.e., a combination of the additive and the PET pellets), for example, 1 wt% to 20 wt%, 1 wt% to 15 wt%, 1 wt% to 10 wt%, 1 wt% to 5 wt%, or 1 wt% to 3 wt%. Under normal circumstances, the above additives commonly used in the art can be applied to the present disclosure.

For example, in some embodiments, a color powder can be added to PET pellets to prepare BOPET with a color of the color powder, such as green, yellow, brown, white, etc., and the surface of the BOPET has a bright effect and high glossiness. BOPET is directly prepared by adding color powder to PET pellets, and subsequent cutting is performed without additional coloring, afterwards an artificial plant organ and an artificial plant product is obtained. This can significantly reduce the production cost while improving production efficiency. In addition, the artificial plant obtained in this way itself presents a corresponding color, such as green, red, or brown, no need to worry about fading and is highly durable. The concentration of color powder can be adjusted according to actual requirements. In actual production, when it is required to manufacture an artificial plant or artificial plant organ with brighter color and higher color saturation, the concentration of color powder can be increased, such that the surface color of the prepared BOPET is brighter and more saturated. For example, by changing the concentration of color powder, artificial leaves with different brightness and color saturation can be manufactured, to simulate leaves of different types and in different growth stages. Furthermore, these artificial leaves can be fixed onto the trunk of the artificial tree according to the growth law of the tree, which can further improve the simulation degree of the artificial tree.

In other embodiments, a flame retardant may be added to PET pellets, such that the BOPET has a flame retardant effect, and thus the artificial plant product manufactured from the BOPET also has a flame retardant effect. In some embodiments, a halogen-free flame retardant is used. According to the composition, flame retardants can be divided into two categories: halogen-containing flame retardants and halogen-free flame retardants. Halogen-containing flame retardants will release a large amount of smoke and harmful gases in the event of fire, causing great harm to people's health and the environment. Due to concerns about human health and environmental protection, halogen-free flame retardants have attracted increasing attention due to their advantages such as high efficiency, environmental protection and safety. Halogen-free flame retardants are mainly divided into phosphorus-based flame retardants (such as ammonium polyphosphate, red phosphorus, and melamine salts; phosphate-based, phosphazene, and phosphaphenanthrene compounds), nitrogen-based flame retardants (such as melamine and its derivatives, dicyandiamide and its derivatives, etc.), silicon-based flame retardants (such as silicone), inorganic metal flame retardants (such as magnesium hydroxide, aluminum hydroxide, hydrotalcite, etc.), bio-based flame retardants (such as vegetable oils with different phosphorus groups introduced into the main chain), etc. The type and amount of the halogen-free flame retardant can be selected as required. Under normal circumstances, halogen-free flame retardant additives commonly used in the art can be applied to the present disclosure.

In some embodiments, a matte BOPET can be prepared by adding a matting agent to PET pellets, wherein the addition of the matting agent gives the surface of BOPET a matte effect and low glossiness. The matting agent includes full-matte matting agent and semi-matte matting agent. The full-matte matting agent has a matte degree of, for example, 5 GU to 15 GU, and the semi-matte matting agent has a matte degree of, for example, 15 GU to 30 GU. Full-matte matting agent and/or semi-matte matting agent can be selected according to actual requirements. Matting agent can provide a non-gloss or weak glossy effect, such that the glossiness of the surface of BOPET is changed, thereby obtaining BOPET with desired glossiness. By printing transparent matting agent, the color and glossiness of BOPET can be closer to real plants, thereby improving the simulation degree of the artificial plant produced by the method. The matting agent can be, for example, epoxy resin matting agent, ND-110 matting agent, L-1030/1031 matting agent, metal soap, wax, and the like.

In some embodiments, an anti-UV agent can be added to PET pellets to prepare BOPET with UV resistance effect. The addition of anti-UV agent makes BOPET resistant to ultraviolet rays and prevents or delays discoloration. Common anti-UV agents include inorganic anti-UV agents, such as titanium dioxide and zinc oxide; organic anti-UV agents, such as UV absorber UV-531, anti-UV finishing agent HTUV100, etc.

In other embodiments, multiple additives may be used simultaneously. For example, a color powder and a matting agent are used, and the prepared BOPET can present the color of the color powder, such as green, yellow, brown, white, etc., while the surface of the BOPET has a matte effect and low glossiness. For another example, a color powder, a matting agent, a flame retardant, and an anti-UV agent may be used simultaneously, so that the prepared BOPET has color development, matte, flame retardancy and UV resistance functions simultaneously, and thus the artificial plant organs and artificial plants prepared therefrom have corresponding functions. Depending on the desired design, under reasonable circumstances, any additive or combination thereof may be attempted to add to achieve the desired function.

Regarding step S13, specifically, functional PET pellets may be first melted to obtain polyester resin blocks, and then the polyester resin blocks may be dried, melted, extruded, cast, and stretched longitudinally and transversely to obtain BOPET.

On the other hand, since PET pellets are refined and polymerized from petroleum as raw materials, the PET pellets contain antimony. Although antimony-containing compounds have flame retardant effects, antimony is toxic and can damage human organs and even induce cancer. In the present disclosure, the antimony element in the PET pellets used to prepare BOPET is chemically replaced by titanium element. The titanium element has low harm to human body, thus the artificial plant produced is safer.

The aforementioned embodiments can be combined arbitrarily unless they are mutually exclusive.

In the aforementioned method for manufacturing the artificial plant organ, multifunctional BOPET is prepared, and then a multifunctional artificial plant organ is prepared. On the one hand, the artificial plant organ prepared from multifunctional BOPET has stronger tensile and impact resistances and is highly durable. In addition, by adding various additives to PET pellets, such as adding color powder, matting agent, halogen-free flame retardant, anti-UV agent and the like, the properties of BOPET can be further improved, such that the artificial plant prepared from multifunctional BOPET also has corresponding properties to achieve application in more scenarios. On the other hand, multifunctional BOPET is formed in one time, which reduces secondary processing, reduces the utilization rate of materials and personnel resources, improves production efficiency and reduces production costs.

It should be understood that, although the various steps in the flowcharts involved in the aforementioned embodiments are sequentially displayed as indicated by the arrows, these steps are not necessarily performed in the order indicated by the arrows. Unless explicitly stated herein, the performing order of these steps is not be limited strictly, and these steps may be performed in other orders. Moreover, at least a part of the steps in the flowcharts involved in the aforementioned embodiments may include a plurality of steps or phases, which are not necessary to be performed simultaneously, but may be performed at different times. The order of execution of these steps or stages is not necessarily sequential, but may be performed by turns or alternately with other steps or at least part of the steps or stages in other steps.

The present disclosure further provides an artificial plant organ manufactured by the aforementioned method. The artificial plant organ provided according to an embodiment of the present disclosure has stronger tensile and impact resistances, while being highly durable and has the advantage of not easily damaged. In addition, by adding various additives to PET pellets, such as adding color powder, matting agent, halogen-free flame retardant, anti-UV agent and the like, the properties of BOPET can be further improved, such that the artificial plant organ prepared from multifunctional BOPET also has corresponding properties to achieve application in more scenarios.

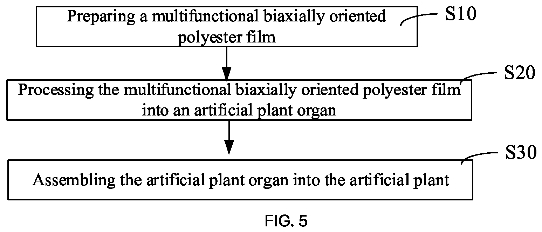

As shown in FIG. 5, the present disclosure further provides a method for manufacturing an artificial plant, which may include the following steps:
S10: preparing a multifunctional biaxially oriented polyester film (BOPET);
S20: processing the multifunctional biaxially oriented polyester film into an artificial plant organ; and
S30: assembling the artificial plant organ into the artificial plant.

The relevant contents involved in S10 and S20 are consistent with the aforementioned contents and will not be repeated here.

In S30, the artificial plant organ can be assembled into the artificial plant, i.e., the artificial plant product, by any suitable means. Artificial plant components can be used to better complete the assembly, including but not limited to a support, a filler, a fastener, an additive, and the like. The support and the filler can be any objects used to support and fill the plant organ, such as used as an internal material of an artificial plant stem, which may include foam, plastic, metal, fiber, and the like. The fastener is used to better fix the plant organ, such as connecting the artificial leaves and artificial stems together, and it may include plastic, metal, fiber, and the like. And the additive can be any suitable auxiliary agent added to achieve certain functions or effects, including but not limited to binder, fragrance agent, glitter, and the like.

For example, in the case of manufacturing an artificial tree, BOPET can be cut into strips to form artificial leaves, in which it is designed to produce leaves and stems connected to each other on the same sheet of BOPET. That is, the leaf part is not cut apart from the stem part during cutting, and they are then wound around a fixture such as an iron wire to form a branch with leaves. Suitable materials are used to serve as a tree trunk and a base, and they are finally assembled together to form an artificial tree product.

As described above, in some embodiments, in order to increase the thickness of a leaf and make the tree product look denser and more beautiful, the manufactured branch can be in a multi-winding pattern, such as double winding, triple winding, etc. as required. In some embodiments, a thickness of a manufactured single sheet of BOPET can be 10 µm to 200 µm, for example, 50 µm, 70 µm, or 100 µm. In some embodiments, the thickness of the single sheet of BOPET can be, for example, equal to or more than 65 µm, which makes the artificial tree in the aforementioned "double winding" pattern not only dense and beautiful, but also closer to real trees.

Similarly, this method has the same advantages as the above method. The artificial plant organ prepared from multifunctional BOPET has stronger tensile and impact resistances and is highly durable. In addition, by adding various additives to PET pellets, such as adding color powder, matting agent, halogen-free flame retardant, anti-UV agent and the like, the properties of BOPET can be further improved, such that the artificial plant prepared from multifunctional BOPET also has corresponding properties to achieve application in more scenarios. On the other hand, multifunctional BOPET is formed in one time, which reduces secondary processing, reduces the utilization rate of materials and personnel resources, improves production efficiency and reduces production costs.

In addition, the present disclosure further provides an artificial plant, manufactured by the method shown in FIG. 5.

In some embodiments, the artificial plant may be in a multi-winding pattern, such as a double winding pattern. The thickness of the single sheet of BOPET can be, for example, equal to or more than 65 µm, which makes the artificial tree in the aforementioned "double winding" pattern not only dense and beautiful, but also closer to real trees.

In some embodiments, a crossed stripe is formed on the surface of the artificial plant. Specifically, the surface is embossed by an embossing roller to form a crossed stripe, which can appropriately reduce the glossiness of BOPET and make it more closely resemble the real plant in terms of visual realism.

The artificial plant prepared from multifunctional BOPET has stronger tensile and impact resistances and is highly durable. In addition, by adding various additives to PET pellets, such as adding color powder, matting agent, halogen-free flame retardant, anti-UV agent and the like, the properties of BOPET can be further improved, such that the artificial plant prepared from multifunctional BOPET also has corresponding properties to achieve application in more scenarios.

In addition, the present disclosure further provides a multifunctional BOPET for manufacturing the aforementioned artificial plant organ or artificial plant. In some embodiments, the multifunctional BOPET may include one or more additives selected from the group consisting of: color powder, light stabilizer, antistatic agent, flame retardant, anti-UV agent, antioxidant, matting agent, brightener, foaming agent, color-changing agent, antibacterial agent and combinations thereof.

### Example

In order to more clearly describe and understand the method and product of the present disclosure, details of the present disclosure are further illustrated and described below using an artificial tree as an example of artificial plant.

The materials and instruments involved in these examples were all common materials and instruments in the art, and the materials can be prepared by oneself or purchased from the market.

### Example 1: Preparation of multifunctional BOPET

### Example 1.1: Preparation of PET pellets

A transparent PET plastic water bottle was recycled, cleaned, and crushed using a crusher, and then processed into PET granules. In this example, the recycling rate of the PET plastic product can reach 100%, the crushed PET pellets can be completely used as raw materials for preparation, without adding or supplementing other substances as main raw materials, and this process can meet the requirements of GRS standard certification.

### Example 1.2: Secondary granulation of PET

The PET granules prepared in Example 1.1 were used, and green color powder, halogen-free flame retardant, semi-matte matting agent, and anti-UV agent were mixed with the PET granules by a granulator. After stirring for a certain time at a certain temperature to achieve uniform mixing (the stirring time and temperature need to be adjusted as required), multifunctional PET granules were obtained.

### Example 1.3: Preparation of multifunctional BOPET

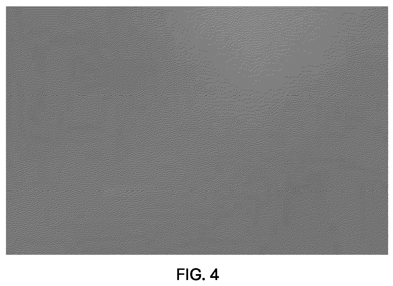

The multifunctional PET granules prepared in Example 1.2 were loaded in a large barrel for drying, and then extruded into a sheet using an extruder. The thick sheet was then stretched longitudinally and transversely, then rolled up, slit and packaged, waiting for subsequent processing. As shown in FIG. 4, a green multifunctional BOPET was obtained. The multifunctional BOPET had color development, flame retardancy, matte, and UV resistance functions. In this example, three single-sheet BOPET with thicknesses of 50 µm, 70 µm, and 100 µm were prepared.

### Example 2: Processing BOPET into artificial plant organ

In this example, an artificial plant organ was manufactured with a double winding pattern. Two sheets of multifunctional BOPET obtained in Example 1.3 were placed in a parallel operating position by a stretching machine, and then the two sheets of BOPET were cut separately and simultaneously according to design requirements. The specific cutting mode and size can be adjusted as required. In this example, artificial leaves and artificial branches were designed to be integrally manufactured. As shown in FIG. 6, cutting was performed along the white lines to obtain strip-shaped leaves separated on both sides and the uncut stem part in the middle.

After cutting, two sheets of BOPET were wound around two iron wires, with the middle stem part as the center, respectively, and then the two wound branches were wound together to form a single, denser branch. Iron wires with suitable length and diameter were used according to the required design. A green branch with leaves was obtained. Multiple branches can be prepared as required.

### Example 3: Assembly of artificial plant

According to the design requirements and taking the actual shape and characteristics of the tree into consideration, the multiple branches obtained in Example 2 were assembled together. The assembled artificial tree can be used as, for example, a Christmas tree. Sample 1 (thickness of 50 µm), sample 2 (thickness of 70 µm) and sample 3 (thickness of 100 µm) of the tree product were selected for subsequent performance test.

Comparative Example 1: Artificial tree manufactured from BOPET without additives

An artificial tree product of Example 3 was manufactured using the same method again, except that, in the preparation process of BOPET, no color powder, flame retardant, anti-UV agent, and matting agent were added.

### Example 4: Performance Test

The samples of the artificial trees obtained in Example 3 and Comparative Example 1 were tested for various performance. Each sample was tested three times in parallel. The test standards or test conditions and results are shown in Table 1 below.

Test environment: room temperature: 25±5°C; relative humidity: 50%+/-20%; luminance: 500-1000 Lux.

Visual conditions: the inspectors had good eyesight and their eyes were 30-40cm away from the sample during inspection.

Visual inspection time: the inspection time for the appearance of each sample was 8-15 seconds.

**Table 1**

| Test type | Test standard, Test condition, and Acceptance criteria | Test Result | | | |
|---|---|---|---|---|---|
| | | Comparative Example Sample | Example Sample 1 | Example Sample 2 | Example Sample 3 |
| Color fastness to rubbing Test | EN ISO 105-X12, AATCC 8, EN 13138-1/- 2/-3, EN ISO 25649-1; | No color | qualified | qualified | qualified |
| | Use a friction tester with a head load of 9 N, rub with cotton cloth, speed of 1 cycle/second, stroke of 104±3 mm, and rub for 10 cycles; | | | | |
| | Acceptance criteria: the staining grade should be greater or equal to Grade 4; no obvious fading, discoloration of the sample color. | | | | |
| Flame retardant Test | UL 588; | unqualified | qualified | qualified | qualified |
| | For a 6-inch sample, ignite the top part and keep the flame in contact with the sample for 5 seconds before removing the flame; | | | | |
| | Acceptance criteria: combustion rate ≤ 4 in/min. | | | | |
| UV aging Test | ISO 4892-3, GB/T 16422.3; | unqualified | qualified | qualified | qualified |
| | Drying: 0.76 w/m², 60±3°C *8h; | | | | |
| | Condensation: 50±3°C *4h; | | | | |
| | perform 8 cycles for a total of 96 h; | | | | |
| | Acceptance criteria: discoloration level ≥Grade 4, no cracks, brittleness, or the like on the surface. | | | | |
| High temperature Test | 60±2°C, 48 h; | unqualified | qualified | qualified | qualified |
| | Acceptance criteria: no damage to the surface appearance, no change in color. | | | | |
| Low temperature Test | Low temperature -20±2°C, 48h; | unqualified | qualified | qualified | qualified |
| | Acceptance criteria: no damage to the surface appearance, no change in color. | | | | |
| Adhesion Test | GB/T 9286, ISO 2409, ASTM D3359; | unqualified | qualified | qualified | qualified |
| | Stick a 3M810 tape on the sample, press back and forth with a finger 3 times for 15 seconds, then quickly tear off the tape; | | | | |
| | Acceptance criteria: no obvious discoloration. | | | | |
| Elasticity Test | Width 40 mm × length 460 mm, place at room temperature for 10 min; wind around a small rubber tube and tie with a rubber band, and place at 50°C*20 min (small rubber tube having a diameter of 25 mm); | unqualified | qualified | qualified | qualified |
| | unfold the sample and measure the diameter of the sample; | | | | |
| | Acceptance criteria: ≥ 30 mm. | | | | |
| Folding Test | Fold the sample twice, press with glass sheets on top and bottom, load 3 kg weight on the top, and place at a high temperature of 60°C for 48 h; a low temperature of -20°C for 48 h; | unqualified | qualified | qualified | qualified |
| | Acceptance criteria: no crack at the fold. | | | | |
| Matte Test | Visual inspect for matte finish | unqualified | qualified | qualified | qualified |

It can be concluded from the above table that the artificial trees with various additives have many excellent properties, such as matte, good flame retardancy, excellent resistance to UV aging, high and low temperature resistance, strong adhesion, good elasticity, and good folding performance. These excellent properties can make the artificial plants more widely used in various fields.

It can be seen that the artificial plant organs or artificial plants manufactured by the method of the present disclosure not only overcome the problems of non-realistic, discoloration, deformation, and environmental pollution of traditional PVC materials by using multifunctional BOPET, but also give the artificial plant organs or artificial plants multifunctionality on this basis, such as UV resistance, matte, and flame retardancy, such that they can better meet people's special requirements and be more widely used in various applications.

Each of the technical features of the aforementioned embodiments can be combined arbitrarily. To simplify the description, not all the possible combinations of the technical features in the aforementioned embodiments are described. However, all of the combinations of these technical features should be considered as within the scope of the present disclosure, as long as such combinations do not contradict with each other.

The aforementioned embodiments merely illustrate several embodiments of the present disclosure, and the description thereof is specific and detailed, but it shall not be constructed as limiting the scope of the disclosure. It should be noted that a plurality of variations and modifications may be made by those skilled in the art without departing from the conception of the present disclosure, which are all within the protection scope of the present disclosure. Therefore, the protection scope of the present disclosure shall be subject to the appended claims.

## Claims

1. A method for manufacturing an artificial plant organ, comprising the following steps:
preparing a multifunctional biaxially oriented polyester film; and
processing the multifunctional biaxially oriented polyester film into an artificial plant organ.

2. The method for manufacturing the artificial plant organ of claim **1,** wherein the artificial plant organ comprises an artificial root, an artificial stem, an artificial leaf, an artificial flower, an artificial fruit, and an artificial seed.

3. The method for manufacturing the artificial plant organ of claim **1,** wherein after preparing the multifunctional biaxially oriented polyester film, the method further comprises:
embossing the multifunctional biaxially oriented polyester film to form an uneven embossing on a surface of the multifunctional biaxially oriented polyester film.

4. The method for manufacturing the artificial plant organ of claim **1,** wherein preparing the multifunctional biaxially oriented polyester film comprises:
preparing polyethylene terephthalate pellets;
adding one or more additives to the polyethylene terephthalate pellets to prepare multifunctional polyethylene terephthalate pellets; and
processing the multifunctional polyethylene terephthalate pellets into the multifunctional biaxially oriented polyester film.

5. The method for manufacturing the artificial plant organ of claim 4, wherein preparing the polyethylene terephthalate pellets comprises:
processing a recycled product of polyethylene terephthalate material to obtain the polyethylene terephthalate pellets.

6. The method for manufacturing the artificial plant organ of claim 4, wherein the one or more additives are selected from the group consisting of: color powder, light stabilizer, antistatic agent, flame retardant, anti-UV agent, antioxidant, matting agent, brightener, foaming agent, color-changing agent, antibacterial agent and combinations thereof.

7. The method for manufacturing the artificial plant organ of claim **1,** wherein processing the multifunctional biaxially oriented polyester film into an artificial plant organ comprises:
cutting the multifunctional biaxially oriented polyester film into a desired shape to assemble into the artificial plant organ.

8. An artificial plant organ, manufactured by the method of any one of claims 1 to 7.

9. A method for manufacturing an artificial plant, comprising the following steps:
manufacturing an artificial plant organ by the method of any one of claims 1 to 7; and
assembling the artificial plant organ into the artificial plant.

10. An artificial plant, manufactured by the method of claim 9.

11. A multifunctional biaxially oriented polyester film for manufacturing the artificial plant organ of claim 8 or the artificial plant of claim 10.
